# EUROPEAN PATENT APPLICATION

(11) **EP 0 961 242 A2**
(43) Date of publication of application: **01.12.1999**
(21) Application number: 99300923.2
(22) Date of filing: 09.02.1999
(51) Int. Cl.: G07F 7/10

(54) **Consumer transaction facility**

(30) Priority: 27.05.1998 JP 14578698
(71) Applicant: FUJITSU LIMITED, Kawasaki-shi, Kanagawa 211-8588 (JP)
(72) Inventor: Kosuda, Hiroyuki, Fujitsu Terminal Systems Ltd., Maebashi-shi, Gunma-ken 371-0855 (JP); Takahashi, Hideyuki, Fujitsu Terminal Systems Ltd., Maebashi-shi, Gunma-ken 371-0855 (JP)
(74) Representative: Stebbing, Timothy Charles

(57) **Abstract**

In a consumer transaction facility (such as an ATM) connected via a communication line (14) to a host computer, a display and input control unit (58) performs on a display device (46) a screen display (47) in which a destination electronic mail address for transaction records can be inputted. After entry of the electronic mail address through an input unit (48), the display and input control unit (58) performs a screen display (47) for selecting whether the transaction records are to be transmitted to that address, and in addition performs a screen display (47) in which it is selectable as to whether the transaction records are to be issued in the form of a printed receipt (38). The user therefore can select how he wishes the transaction to be recorded.

## Description

The present invention relates to a consumer transaction facility preferably applicable to for example, an automatic teller machine (ATM) and a cash dispenser (CD), which are capable of performing banking services such as depositing money in a bank and drawing one's money from the bank.

ATMs and the like have come into wide use recently, since those machines permit transactions for receipt of money and payment without a window of a bank and the like or without going to the bank.

According to such an ATM and the like, there is provided such an arrangement that a transaction record of a customer is discharged in the form of a sheet receipt.

However, in case of the sheet receipt, it often happens that after confirmation of the content of the transaction record of the customer, the sheet receipt is thrown away, or there is a possibility that the sheet receipt is lost per se.

On the other hand, there is a proposal that the transaction record of the customer is transmitted to a terminal of his house so as to be managed in the form of electronic data.

A technology related to this proposal is disclosed in Japanese Patent Application Laid-Open Gazette Hei.4-372057 in which there is provided a description that " The present system is to transmit to an arbitrary place such as one's home information as to transactions performed using a banking terminal such as an ATM and the like. A customer performs transactions through the banking terminal such as an ATM and the like, and inputs a FAX number of a destination of information as to the transactions. This information as to the transactions is transmitted by the banking terminal such as an ATM and the like to a host computer and then transmitted by the host computer via a telephone line to an optional place. In the event that a destination address of information is registered onto an account, transactions performed through the account are automatically transmitted.".

However, according to the earlier technology as mentioned above, in the event that a destination address of information is registered onto an account beforehand, contents of the transactions carried out through the banking terminal such as an ATM and the like are automatically transmitted to a terminal of the destination address of information registered. This is troublesome for the customer as the user of the terminal in the point that transaction information, which is deemed to be unnecessary for the customer, is also transmitted, and in addition -this is associated with such a problem that it is expensive since a communication line is necessarily used.

Further, in the event that the conventional banking terminal such as an ATM and the like is used, since the transaction record is always issued in the form of a sheet receipt, except for the case of use of a bankbook, it is troublesome for the customer.

Japanese Patent Application Laid-Open Gazette Hei.4-372057 fails to describe any matter as to a registration treatment of a destination address of information. Thus, it is unclear as to the registration treatment.

In the light of the aforementioned problems, it is desirable to provide a consumer transaction facility permitting a destination address of a transaction record (transaction information) to be readily entered on the consumer transaction facility.

It is also desired to provide a consumer transaction facility capable of prohibiting a transaction record from being issued in the form of a sheet receipt.

It is still further desired to provide a consumer transaction facility capable of transmitting a transaction record also to a destination address other than the registered destination address.

According to the present invention, there is provided a consumer transaction facility for communicating with a host computer having a transaction information file for customers via a communication line in accordance with an operation of a customer to perform a customer's desired transaction, said consumer transaction facility comprising: a display device; display control means for controlling a display on said display device; and input means for performing an input operation in accordance with a display on said display device, wherein said display control means performs on said display device a screen display in which a destination electronic mail address for a transaction record of a customer is able to be inputted through said input means, a screen display in which it is selectable through said input means as to whether the transaction record is to be transmitted to the destination electronic mail address, and a screen display in which it is selectable through said input means as to whether the transaction record is to be issued in the form of a sheet. This feature makes it possible to readily input the destination address of transaction records on the consumer transaction facility. Further it is possible to prohibit the transaction records from being issued in the form of a sheet in accordance with a user's will.

Further, in the consumer transaction facility as mentioned above, it is preferred that said display control means performs on said display device a screen display in which a number of transaction records including a new transaction record and past transaction records is able to be selected through said input means. This feature makes it possible for the user to know one's past transaction records.

According to the present invention, there is also provided a consumer transaction facility for communicating with a host computer having a transaction information file for customers via a communication line in accordance with an operation of a customer to perform a customer's desired transaction, said consumer transaction facility comprising: a display device; display control means for controlling a display on said display device; input means for performing an input operation in accordance with a display on said display device; and communication control means for controlling communications with the host computer, wherein said display control means causes said display device to display transaction indications including a payment indication, and performs on said display device a screen display indicative of a matter that an electronic mail address for transmitting a transaction record is able to be registered, when the electronic mail address is inputted through said input means in association with the screen display indicative of a matter that the electronic mail address is able to be registered, said communication control means transmits the inputted electronic mail address via the communication line to said host computer so that the electronic mail address is registered in association with the transaction information file for customers, in the event that the electronic mail address is registered, when a transaction is performed through an operation of said input means in accordance with the transaction indications, said display control means performs on said display device a screen display in which it is selectable through said input means as to whether the transaction record is to be transmitted to the registered electronic mail address or an electronic mail address other than the registered electronic mail address, and when a selection operation that the transaction record is to be transmitted to an electronic mail address other than the registered electronic mail address is made through said input means, said display control means performs on said display device a screen display in which a new destination electronic mail address for the transaction record is able to be inputted through said input means. This feature makes it possible to transmit the transaction records to an electronic mail address other than the registered electronic mail address.

In the consumer transaction facility as mentioned above, it is preferred that when said display control means performs on said display device a screen display in which it is selectable through said input means as to whether the transaction record is to be transmitted to the registered electronic mail address or an electronic mail address other than the registered electronic mail address, said display control means performs a screen display in which it is selectable through said input means as to whether the transaction record is to be issued in form of a sheet. This feature makes it possible to prohibit the transaction records from being issued in the form of a sheet in accordance with a user's will.

Further in the consumer transaction facility as mentioned above, it is preferred that said display control means performs on said display device a screen display in which a number of transaction records including a new transaction record and past transaction records is able to be inputted through said input means. This feature makes it possible for the user to access his or her past transaction records.

Reference will now be made, by way of example, to the accompanying drawings in which:
Fig. 1 is a block diagram of a system to which an embodiment of the present invention is applied;
Fig. 2 is a perspective view of a consumer transaction facility according to this embodiment of the present invention;
Fig. 3 is a flowchart (1/3) useful for understanding an operation of this embodiment of the present invention;
Fig. 4 is a flowchart (2/3) useful for understanding an operation of this embodiment of the present invention;
Fig. 5 is a flowchart (3/3) useful for understanding an operation of this embodiment of the present invention;
Fig. 6 is a diagrammatic view useful for understanding an initial screen;
Fig. 7 is a diagrammatic view useful for understanding an input screen for one's personal identification number;
Fig. 8 is a diagrammatic view useful for understanding an input screen for an electronic mail address;
Fig. 9 is a diagrammatic view useful for understanding a screen after an input of an electronic mail address;
Fig. 10 is a diagrammatic view useful for understanding an alternative initial screen;
Fig. 11 is diagrammatic view useful for understanding a screen for selection between an issue and a transmission of transaction records;
Fig. 12 is diagrammatic view useful for understanding a screen for a designation of a new transmission destination;
Fig. 13 is diagrammatic view useful for understanding an example of a final display screen on a consumer transaction facility; and
Fig. 14 is a diagrammatic view useful for understanding an example of a display of transaction records on a terminal.

Hereinafter, an embodiment of the present invention will be described in conjunction with the accompanying drawings.

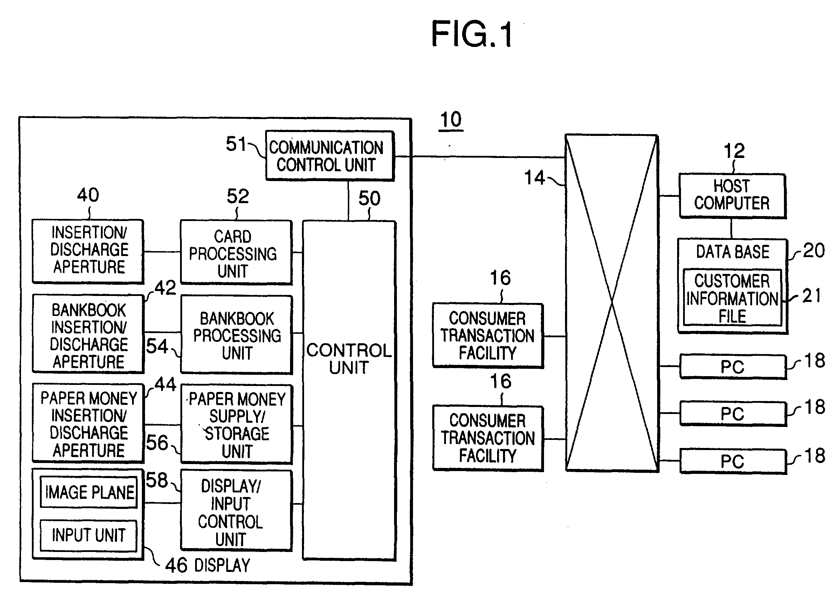

Fig. 1 shows a structure of a consumer transaction system 10 to which an embodiment of the present invention is applied.

The consumer transaction system 10 comprises basically a host computer 12 installed in a bank or the like, a plurality of consumer transaction facilities 16 connected via a communication line 14 to the host computer 12, and a plurality of personal computers (hereinafter, referred to as terminals) 18 connected via the communication line 14 to the host computer 12. The personal computers serve as customer terminals.

In the present embodiment, it is assumed that the consumer transaction facilities 16 are applied to an automatic teller machine (ATM), which is capable of performing banking services such as depositing money in a bank and drawing one's money from the bank. It is noted, however, that the consumer transaction facilities 16 are also applicable to a cash dispenser (CD).

The host computer 12 for performing banking services has a data base 20 which stores therein a customer information file (a transaction information file for customers) 21 and a consumer transaction terminal information file. The customer information file 21 stores therein transaction records of a customer in the form of data, an electronic mail address registered in association with the transaction records of the customer, etc.

In the present embodiment, it is assumed that each of the terminals 18 has an electronic mail address of the associated customer.

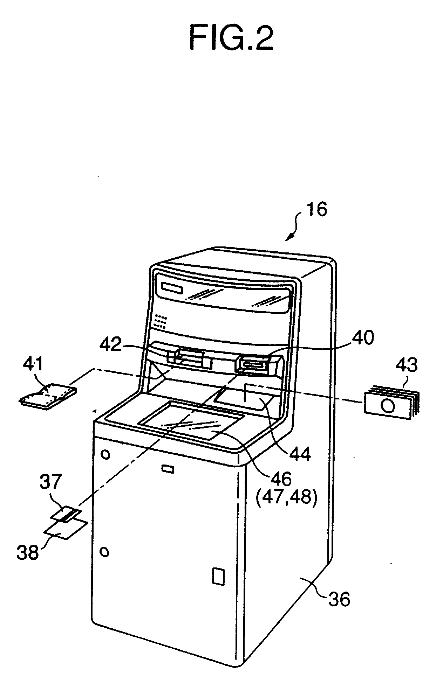

Fig. 2 is a perspective view of the consumer transaction facility 16 according to this embodiment of the present invention. The consumer transaction facility 16 has a main frame 36 which is provided with, as an interface with a customer, a card insertion/receipt/card discharge aperture (simply referred to as a card insertion and discharge aperture too) 40 through which a card 37 on which account information is recorded is inserted and discharged, and a receipt (paper receipt) 38 is discharged in the form of a sheet (paper or a sheet made of synthetic resin and the like) on which transaction contents are recorded, a bankbook insertion and discharge aperture 42 through which a bankbook 41 is inserted and discharged, a paper money entry and discharge aperture 44 serving as an entry for paper money 43 for depositing or a discharge outlet for paper money 43 for payment, and a display device 46 serving both as a display unit and an customer operating unit through which a customer performs an operation for input processing and the like in accordance with a displayed guidance.

In this case, the display device 46 has an input unit (input means) 48 serving as a so-called touch panel and a screen (image plane) 47 on which images and the like are displayed. The input unit 48 makes it possible to input an electronic mail address in accordance with a display on the screen 47, as will be described latter.

In Fig. 1, each of the consumer transaction facilities 16 has a control unit ( also referred to as a transaction service control unit ) 50 for controlling the consumer transaction facility 16 in its entirety including transaction services. Connected to the control unit 50 are a communication control unit 51 one end of which is connected to the communication line 14, a card processing unit 52, a bankbook processing unit 54, a paper money supply storage unit 56, and a display and input control unit 58 serving as display control means and input control means.

The card processing unit 52 has a function of reading information such as an account number and the like recorded on the card 37 inserted by a customer to print on the receipt 38 contents of transactions performed by the consumer transaction facility 16 into issue.

The bankbook processing unit 54 has a function of printing transaction contents on the bankbook 41 inserted by the customer.

The paper money supply storage unit 56 performs a supply of the paper money 43 for payment and a storage of the deposited paper money 43 in accordance with an instruction of the control unit 50.

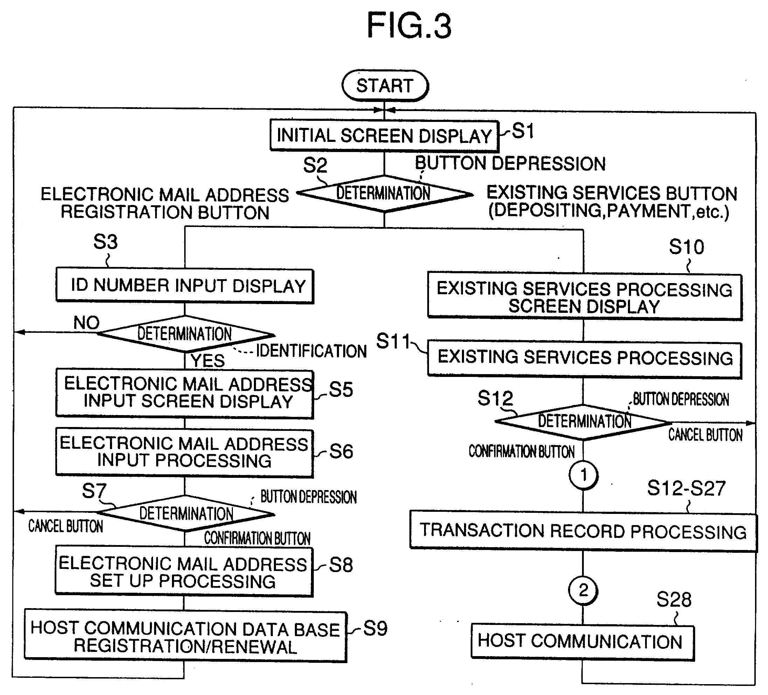

Next, the operation of the above-mentioned embodiment will be described with reference to Figs. 3, 4 and 5 , as well as the remaining Figures.

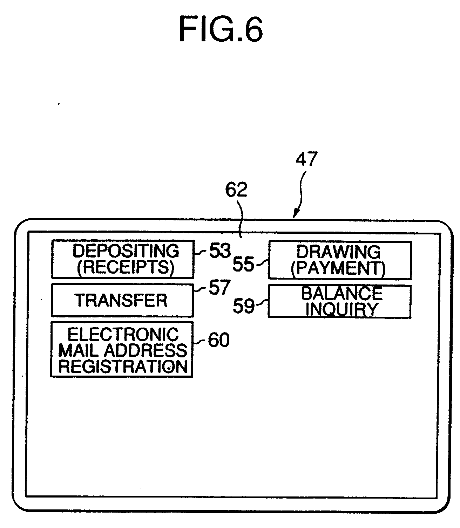

When a customer as a user reaches the front of the consumer transaction facility 16, an initial screen 62 as a transaction screen shown in Fig. 6 is displayed on an image plane 47 of the display device 46 (step S1).

As seen from Fig. 6, the initial screen 62 comprises a depositing button 53, a payment button 55, a transfer button 57, a balance inquiry button 59, and an electronic mail address registration button 60 peculiar to the present embodiment, those buttons being service buttons and representative of transaction items.

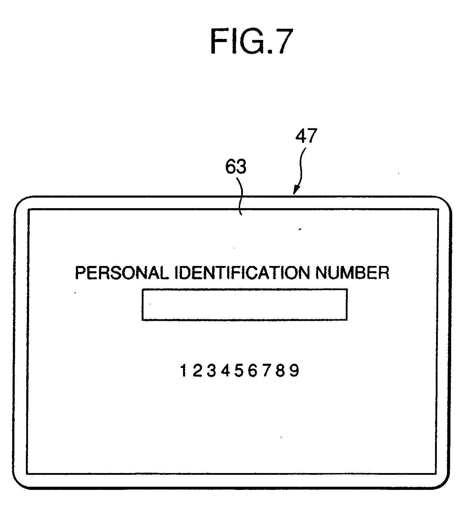

When the electronic mail address registration button 60 is pressed or touched (steps S2), the display is reversed to indicate that the button has been selected, and a message such as "please insert your card and input your personal identification number" is generated as speech from a loud speaker and the like and/or a screen display, and then the image plane 47 is changed to an input screen 63 for a personal identification number shown in Fig. 7 (step S3).

In this case, the customer as the user inserts the card 37 through the card insertion and discharge aperture 40 and input his/her personal identification number of four digits through the input screen 63.

In this way, the customer is identified (step S4) in a similar fashion to that of the conventional services. That is, when the card 37 is inserted through the card insertion and discharge aperture 40, the card processing unit 52 reads the account number and the like and transmits the same in the form of data to the data control unit 50. When the personal identification number of the customer is inputted through the input unit 48, it is transmitted in the form of data from the display and input control unit 58 to the control unit 50.

At that time, the control unit 50 communicates via the communication control unit 51 and the communication line 14 with the host computer 12. The host computer 12 retrieves the customer information file 21 of the data base 20 to determine the identity of the customer on the basis of the account number and the personal identification number and informs the control unit 50 of the determined result via the communication line 14 and the communication control unit 51. In the event that the control unit 50 receives the determination result indicating that the customer is not properly identified , the display returns to the input screen 63 for a personal identification number or the initial screen 62 together with a display and/or speech informing the customer of this (step S4: NO).

On the other hand, in the event that the control unit 50 receives the determination result indicating that the customer has been properly identified (step S4: YES), the control unit 50 causes the display and input control unit 58 serving as the electronic mail input screen control unit to perform the processing in accordance with the determination result.

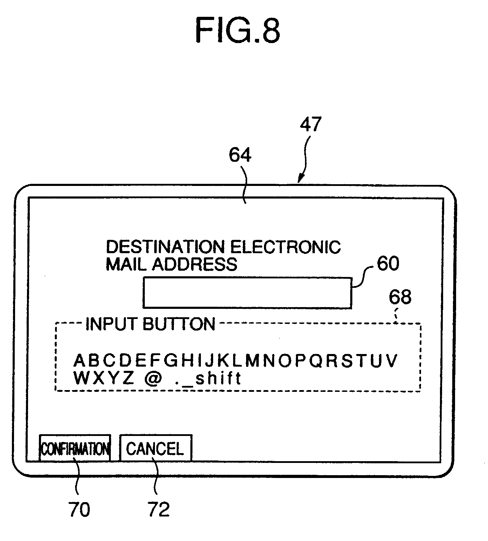

At that time, first, an electronic mail address input screen 64 shown in Fig. 8 is displayed on the image plane 47 (step S5).

On the electronic mail address input screen 64, there is displayed an electronic mail address input window 66 below the message "destination electronic mail address".

In this condition, an input button 68 is used to input English letters and the like representative of user names, domain names, etc., so that the input processing for electronic mail address is performed (step S6).

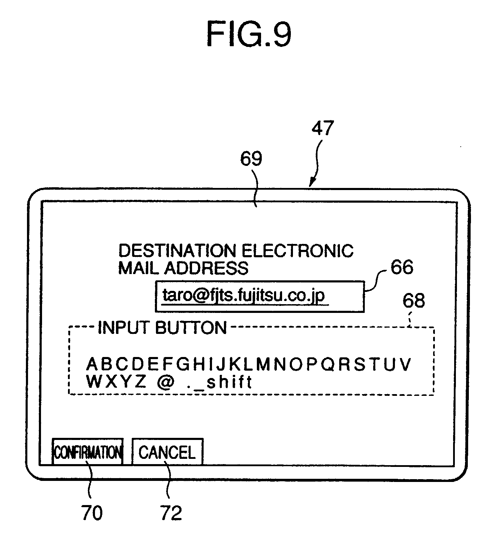

In a screen 69 on which the inputted electronic mail address is displayed in a window 66, as shown in Fig. 9, when a confirmation button 70 is pressed (step S7: YES), a setting process for the electronic mail address is performed to set up the electronic mail address in the control unit 50 (step S8) . Incidentally, when a cancel button 72 is pressed without pressing of the confirmation button 70, it returns to the initial screen 62 shown in Fig. 6 (step S7: NO).

When the electronic mail address in the control unit 50 is set up, a communication is performed between the consumer transaction facility 16 and the host computer 12, so that the host computer 12 stores the electronic mail address thus set up in the customer information file 21 of the data base 20 in association with the user's account number of the card 37. Thus, the registration or the renewal of the electronic mail address onto the data base 20 is made (step S9). Incidentally, in the event that the registration processing of the electronic mail address involved in the steps S3 to S8 is first performed, a registration processing of the electronic mail address is performed, and in the event that the registration processing of the electronic mail address is performed on and after the second time, a renewal registration processing of the electronic mail address is performed.

At the time when the registration processing of the electronic mail address is terminated, the initial screen 62 shown in Fig. 6 is displayed again (step S1).

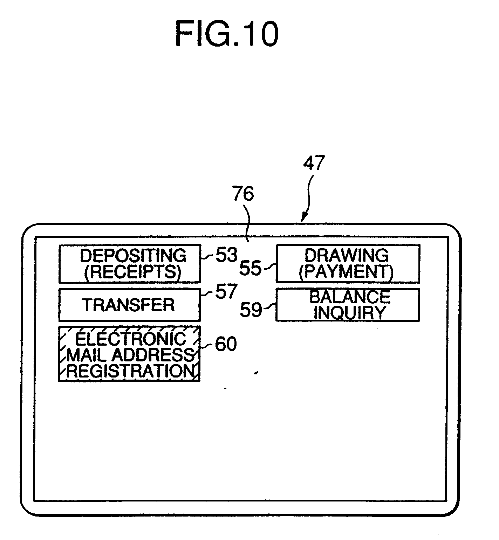

Incidentally, in the initial screen 62 after the registration processing of the electronic mail address involved in the steps S1 to S9 has been performed, it is possible to change the display to a screen in which an electronic mail address registration button 60 is not displayed but buttons 53, 55, 57 and 59 representative of the transaction items are displayed, or even button 60 is displayed and pressed, it is unavailable. Fig. 10 shows a display of an initial screen 76 indicating that selection of the electronic mail address registration button 60 is unavailable ("greyed out").

In the event that the initial screen 76 is displayed, when any one of the buttons 53, 55, 57 and 59 representative of the transaction items is pressed, the existing service processing screen (not illustrated) is continuously displayed (step S10), and the existing service processing is carried out (step S11).

In the event that the existing service processing is carried out, when the above-mentioned registration processing of the electronic mail address has been performed, the customer identification determination processing by the confirmation of the association between the account number and the personal identification number of the card 37 is completed, and thus the entry of an amount of money successive to the entry of the transaction item (any one of depositing, payment, transfer, etc.) causes those data to be transmitted from the display and input control unit 58 to the control unit 50.

Upon receipt of those data , the control unit 50 communicates via the communication control unit 51 and the communication line 14 with the host computer 12. The host computer 12 retrievals the customer information file 21 of the data base 20 to determine as to whether the transaction designated by the input data is in an available state, and informs the determination of the result to the control unit 50 via the communication line 14 and the communication control unit 51.

The control unit 50 executes the transaction processing or displays on the screen 47 of the display device 46 the reason why the transaction processing is not carried out through the display and input control unit 58 in accordance with the determination result.

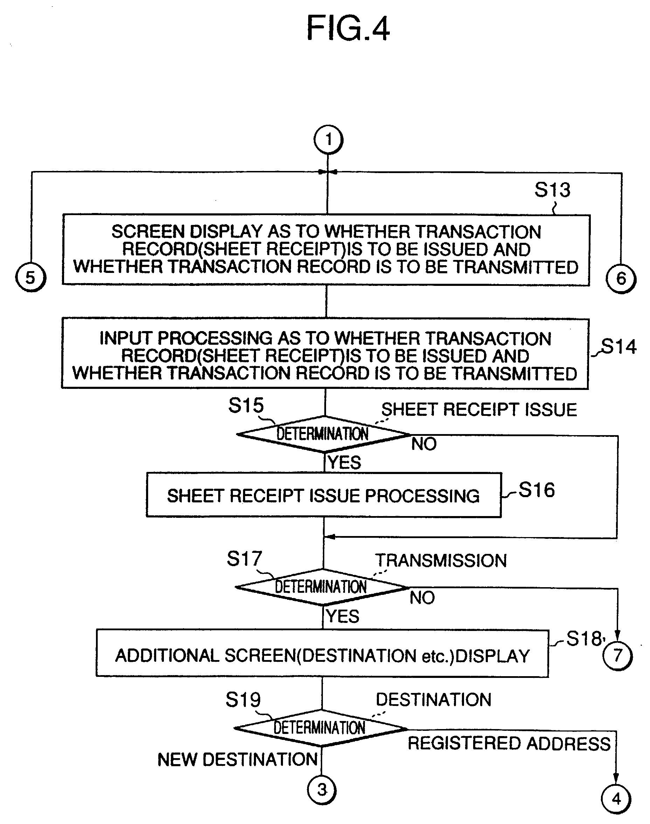

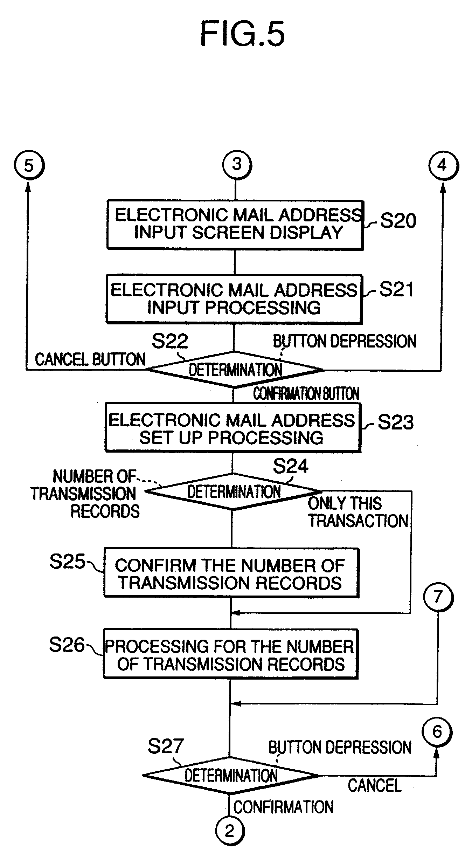

When the transaction processing involved in the existing service is completed, in other words, under the condition that the confirmation button is finally pressed for the existing service, the control unit 50 initiates the transaction record processing of which contents are shown in detail in Figs. 4 and 5 (step S12: selection of the confirmation button).

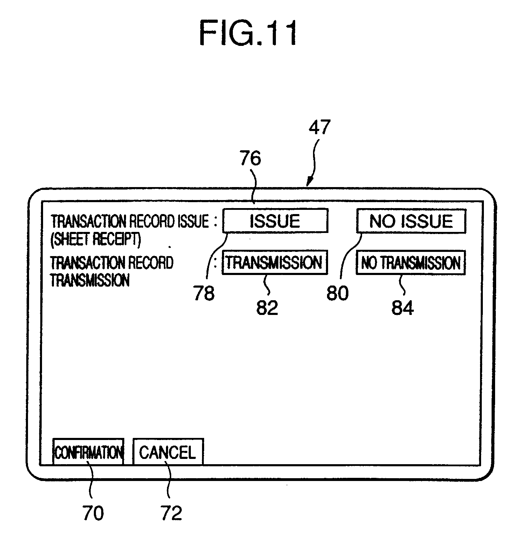

At that time, first, as shown in Fig. 11, there is displayed a screen for confirmation as to whether the display and input control unit 58 issues the transaction record in the form of the sheet receipt 38, and as to whether the display and input control unit 58 transmits the transaction record to the registered electronic mail address (step S13). As seen from Fig. 11, displayed on a screen 76 for transaction record issue confirmation and transaction record transmission confirmation an issue button 78 and a non-issue button 80 for instructing whether the transaction record is issued in the form of the sheet receipt 38 as in the existing service, and a transmission button 82 and a non-transmission button 84 for instructing whether the transaction record is transmitted to the electronic mail address.

Thus, input processing for those buttons 78, 80, 82 and 84 is performed (step S14). In this case, if either the issue button 78 or the non-issue button 80 involved in the issue of the transaction record is pressed and if either the transmission button 82 or the non-transmission button 84 involved in the transmission/non-transmission of the transaction record is pressed, the input processing is completed.

Next, processing is performed in accordance with the input processing. First, it is determined whether the sheet receipt 38 is to be issued (step S15). In the event that an input of instructing the issue of the sheet receipt 38 is made (step S15: presence), the card processing unit 52 issues the sheet receipt 38 on which transaction contents (referred to as the transaction records ) are printed, and discharged together with the card 37 to the card insertion/receipt/card discharge aperture 40 (step S16).

After completion of the receipt issue processing, or in the event that an input instructing no issue of the sheet receipt 38 is made (step S15: absence), it is determined whether transmission to the electronic mail address is necessary (step S17).

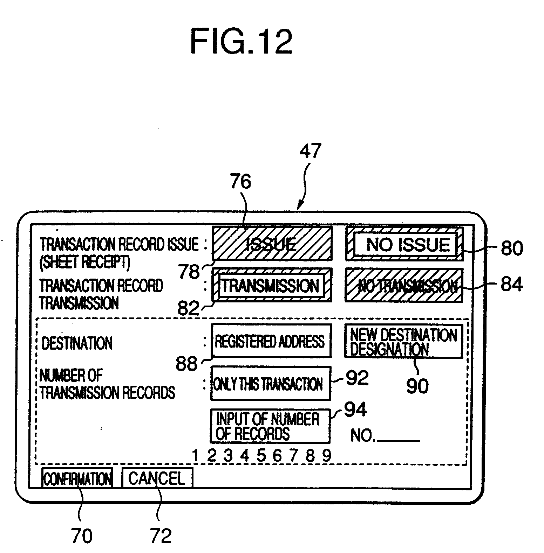

In the event that the input of instruction of necessity for transmission is made (step S17: presence), there is displayed an additional screen 86 for determining the destination and the like as shown in Fig. 12 (step S18). On the additional screen 86, it is indicated on a reverse display basis that the non-issue button 80 and the transmission button 82 have been selected.

At that time, it is determined as to which one is pressed between a registered address button 88 and a new destination designation button 90 for designating any one of the electronic mail addresses but the registered electronic mail address (step S19).

In the event that the new destination designation button 90 is pressed (step S19: new destination), there are executed an electronic mail address input screen display processing (step S20) explained with reference to the electronic mail address input screen 64 shown in Fig. 8, an input processing (step S21) for the electronic mail address of the new destination explained with reference to the screen 69 shown in Fig. 9, a button selection determination processing (step S22), and a new destination electronic mail address setting processing (step S23), which correspond to the processings of the above-mentioned steps S3, S4, S5 and S6, respectively.

According to the present embodiment, the electronic mail address of the new destination inputted in the processing of the step S21 is treated as an electronic mail address which is effective only in the present transaction, there is not performed a renewal processing for the electronic mail address of the customer information file 21 on the data base 20 of the host computer 12. According to the present embodiment, as mentioned above, there is provided such an arrangement that the renewal processing for the electronic mail address is performed only for the electronic mail address inputted after the electronic mail address registration button 60 is pressed, on the initial screen 62 shown in Fig. 6, in the processing of the step S6 (cf. Step S9: data base registration/renewal processing) .

Next, it is determined whether only transaction button 92 and a record number input button 94 in the column of the number of transmission records are pressed (step S24). In the event that it is determined that the record number input button 94 is pressed, the number of inputs of the number of records is confirmed (step S25).

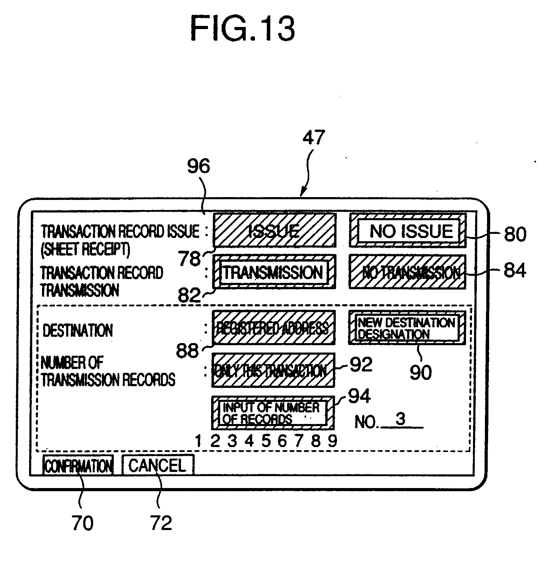

Next, a transmission record number processing is carried out (step S26). In this case, the control unit 50 makes the contents to be transmitted in the new transaction in the form of a transmission file. Specifically, in the event that the screen 47 which is finally displayed is a final display screen 96 shown in Fig. 13, since it is designated that the transaction record is transmitted to the new destination address, the control unit 50 makes the new destination electronic mail address and a total of three records (the new transaction record and the past two times of transaction records, that is, a total of three records ) inputted into a record number input column in the form of the transmission file in association with the account number.

In the state of the final display screen 96 shown in Fig. 13, when the confirmation button 70 is selected (step S27), the process goes to a step S28 in which a host communication processing is performed.

In the host communication processing, the above-mentioned transmission file is transmitted from the control unit 50 constituting the consumer transaction facility 16 through the communication control unit 51 and the communication line 14 to the host computer 12. At that time, there is displayed on the screen 47 such a message as "three transaction records have been transmitted to the new destination electronic mail address". Thus, the transaction with the user at the place of setting up the consumer transaction facility 16 is terminated.

The host computer 12 refers to the transmitted transmission file to retrieve the customer information file 21 for the associated customer in view of the account number, and transmits the past three transaction records including the new transaction content to the new destination electronic mail address. Thus, the transaction record data are transmitted on an electronic mail basis to the specified terminal 18 designated by the new destination electronic mail address.

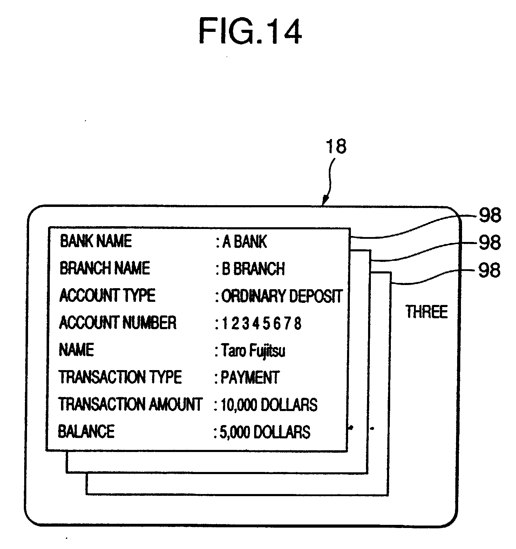

Fig. 14 shows contents of the electronic mail received by the specified terminal 18 designated by the new destination electronic mail address, that is, the state in which transaction records 98 are displayed on the display of the terminal 18.

The user of the specified terminal 18 can find out, by using the display screen, the contents of the transaction records 98, that is, a bank name (A bank), a branch name (B branch) of the bank A, a type of bank account (ordinary deposit account), a bank account number (1345678), an account name (Taro Fujitsu), a type of transaction (payment), an amount of money being transacted (10,000 dollars), and the balance (5,000 dollars) . The contents of the transaction records 98 may include date of transactions and service charges.

From the screen display of Fig. 14, it will be understood that the user has received the last three transaction records 98 including the new transaction record 98.

For example, in the event that the transaction records 98 are displayed in the form of text data, it is possible to display the transaction records 98 by a wide use of mailer which is a software capable of dealing with electronic mail. In order to provide a fine display, it is possible that the host computer 12 makes documents including the transaction records 98 in the form of an HTML document and the like, and the terminal 18 displays the documents thus generated by the use of a viewer.

Further, it can be arranged that the host computer 12 processes the transaction records 98 into data suitable for a spreadsheet program, and the terminal 18 processes the received data using a spreadsheet software. This makes it possible to manage the transaction records 98 in the form of a so-called electronic account book.

According to the present embodiment mentioned above, it is possible to readily input the destination electronic mail address of the transaction records 98 on the consumer transaction facility 16. This makes it possible to confirm the transaction records, if necessary, a number of times, on the terminal 18 specified by the electronic mail address. Consequently, it is also possible to attain such an additional effect that a register of a cash-book and the like operative on the terminal 18 through which the transaction records 98 can be confirmed is readily performed.

Further, according to the present embodiment, it is possible to prohibit the transaction records 98 from being issued in the form of the sheet receipt 38 in accordance with an intention of the user of the consumer transaction facility 16, and thereby avoiding waste.

Furthermore, according to the present embodiment, since an electronic mail address is registered, it is possible to utilize the existing infrastructure such as the Internet.

Still furthermore, according to the present embodiment, since it is also possible to transmit the destination address of the transaction record to a destination address other than the registered destination address, it is possible to confirm the transaction record on a terminal 18 for example, other than the terminal 18 which is usually used by the user.

As mentioned above, in an embodiment of the invention, it is possible to readily input through a consumer transaction facility a transaction record destination address for transmitting transaction contents performed through a consumer transaction facility, and whereby it is possible to expect such an effect that the transaction contents can be confirmed through a terminal and the like which is designated by the transaction record destination address. Since the transaction contents can be confirmed through a terminal and the like, it is possible to store and manage the transaction contents in the form of data in the terminal and the like.

Further, according to the present embodiment there is provided on a screen of the display device of the consumer transaction facility an indication as to whether the transaction record is to be issued in the form of sheet receipt. Thus, for example, in the event that it is selected that the transaction record is not to be issued, it is possible to reduce the use of sheets as the resource.

Furthermore, according to the present embodiment since it is also possible to transmit the destination address of the transaction record to-a destination address other than the registered destination address, it is possible to confirm the transaction record on a terminal other than the terminal normally used at home by the user.

While the present invention has been described with reference to the particular illustrative embodiments, it is not to be restricted by those embodiments but only by the appended claims. It is to be appreciated that those skilled in the art can change or modify the embodiments without departing from the scope of the present invention. For example, although the described embodiment employs a touch screen, a keypad, cursor key, or keyboard may be provided for user input, instead of or as well as the touch screen.

## Claims

1. A consumer transaction facility for communicating with a host computer (12) having a transaction information file (21) for customers via a communication line (14) in accordance with an operation of a customer to perform a customer's desired transaction, said consumer transaction facility comprising:
a display device (46);
display control means (58) for controlling a display on said display device (46); and
input means (48) for performing an input operation in accordance with a display on said display device (46),
wherein said display control (58) means performs on said display device (46) a screen display (47) in which a destination electronic mail address for a transaction record of a customer is able to be inputted through said input means (48), a screen display (47) in which it is selectable through said input means (48) as to whether the transaction record is to be transmitted to the destination electronic mail address, and a screen display (47) in which it is selectable through said input means (48) as to whether the transaction record is to be issued in the form of a sheet (38).

2. A consumer transaction facility according to claim 1, wherein said display control means (58) performs on said display device (46) a screen display (47) in which a number of transaction records including a new transaction record and past transaction records is able to be selected through said input means (48).

3. A consumer transaction facility for communicating with a host computer (12) having a transaction information file (21) for customers via a communication line (14) in accordance with an operation of a customer to perform a customer's desired transaction, said consumer transaction facility comprising:
a display device (46); display control means (58) for controlling a display on said display device (46); input means (48) for performing an input operation in accordance with a display (47) on said display device (46); and communication control means (51) for controlling communications with the host computer (12),
wherein said display control means (58) causes said display device (46) to display transaction indications including a payment indication, and performs on said display device (46) a screen display (47) indicative of a matter that an electronic mail address for transmitting a transaction record is able to be registered,
when the electronic mail address is inputted through said input means (48) in association with the screen display (47) indicative of a matter that the electronic mail address is able to be registered, said communication control means (51) transmits the inputted electronic mail address via the communication line (14) to said host computer (12) so that the electronic mail address is registered in association with the transaction information file for customers,
in the event that the electronic mail address is registered, when a transaction is performed through an operation of said input means (48) in accordance with the transaction indications, said display control means (58) performs on said display device (46) a screen display (47) in which it is selectable through said input means (48) as to whether the transaction record is to be transmitted to the registered electronic mail address or an electronic mail address other than the registered electronic mail address, and
when a selection operation that the transaction record is to be transmitted to an electronic mail address other than the registered electronic mail address is made through said input means (48), said display control means (58) performs on said display device (46) a screen display (47) in which a new destination electronic mail address for the transaction record is able to be inputted through said input means (48).

4. A consumer transaction facility according to claim 3, wherein when said display control means (58) performs on said display device (46) a screen display (47) in which it is selectable through said input means (48) as to whether the transaction record is to be transmitted to the registered electronic mail address or an electronic mail address other than the registered electronic mail address, said display control means (58) performs a screen display (47) in which it is selectable through said input means (48) as to whether the transaction record is to be issued in form of a sheet (38).

5. A consumer transaction facility according to claim 3 or 4, wherein said display control means (58) performs on said display device (46) a screen display (47) in which a number of transaction records including a new transaction record and past transaction records is able to be selected through said input means (48).

6. A customer transaction facility for allowing a customer to perform a transaction in communication with a host computer, comprising means for allowing the customer to select one or both of a printed record of the transaction and an electronic mail record of the transaction, the electronic mail record being delivered to an electronic mail address designated by the customer.
